Europäisches Patentamt

European Patent Office

Office européen des brevets

(11) Publication number: **0 621 310 A1**

# EUROPEAN PATENT APPLICATION

(21) Application number: **94105974.3**

(22) Date of filing: **18.04.94**

(51) Int. Cl.5: **C08L 23/16**, C08L 23/20

(30) Priority: **22.04.93 JP 95914/93**

(43) Date of publication of application:
**26.10.94 Bulletin 94/43**

(84) Designated Contracting States:
**BE DE FR GB IT NL**

(71) Applicant: **MITSUI PETROCHEMICAL INDUSTRIES, LTD.**
**2-5, Kasumigaseki 3-chome**
**Chiyoda-ku**
**Tokyo (JP)**

(72) Inventor: **Kohyama, Masaki, c/o Mitsui Petrochem. Ind., Ltd.**
**1-2, Wagi 6-chome,**
**Wagi-cho**
**Kuga-gun, Yamaguchi (JP)**
Inventor: **Kagawa, Fukashi, c/o Mitsui Petrochem. Ind., Ltd.**
**1-2, Wagi 6-chome,**
**Wagi-cho**
**Kuga-gun, Yamaguchi (JP)**

(74) Representative: **Hansen, Bernd, Dr. Dipl.-Chem. et al**
**Hoffmann, Eitle & Partner,**
**Patentanwälte,**
**Arabellastrasse 4**
**D-81925 München (DE)**

(54) **Highly shrinkable packaging film.**

(57) A highly shrinkable packaging film comprising a stretched film of a resin composition comprising (A) 5 to 60 parts by weight of a 1-butene-based polymer, (B) 30 to 90 parts by weight of a propylene-ethylene-based random copolymer, and (C) 5 to 50 parts by weight of at least one member selected from a petroleum resin, a hydrogenated petroleum resin and a terpene resin. The packaging film of the present invention exhibits high flexibility, high heat shrinkage and low natural shrinkage, and after the shrink-packaging, it has beautiful appearance with no loosening or sagging. Also, it can be produced by stretching the film at a temperature lower than the temperature used in conventional packaging films.

BACKGROUND OF THE INVENTION

This invention relates to a highly shrinkable packaging film. More particularly, this invention relates to a packaging film which is highly shrinkable, and which exhibits excellent appearance and undergoes little loosening or sagging after the shrink packaging.

Shrinkable films have been widely used for packaging industrial components, articles for daily use, foodstuffs, and the like since they are readily capable of tightly packaging articles of irregular configuration, and the thus packaged articles exhibit a good appearance.

Shrinkable films are also used for packaging cans and bottles for cooling beverages, whiskeys and juices to avoid breakage of the bottles and to enable a decrease in the thickness of the bottles and cans to thereby save resources and energy, and to provide various designs with the commodity by multi-color printing of the film.

For such shrinkable films, polyvinyl chloride films have been widely used since they are highly shrinkable, and once shrink-packaged, they undergo little decrease in shrinking stress to exhibit little loosening or sagging of the film. Polyvinyl chloride films, however, suffer from environmental problems, and polyolefin-based films have been developed as the substitutes for the polyvinyl chloride films. Such polyolefin-based films include films of a composition prepared by blending a propylene-ethylene copolymer or a propylene-α-olefin copolymer with a terpene resin or a hydrogenated petroleum resin as disclosed in Japanese Patent Publication No. 41-7958; and a composition prepared by blending an ethylene-propylene random copolymer or an ethylene-propylene-α-olefin random copolymer with a petroleum resin or a terpene resin and an ethylene-α-olefin resin as disclosed in Japanese Patent Application Kokai No. 62-4735.

Such conventional polyolefin-based films are provided with a considerably high shrinkability at a low temperature. However, they are incapable of retaining their shrinkability after the shrink-packaging to undergo a considerable decrease in their shrinking stress, and consequently, experience loosening or sagging after a while. In other words, tight packaging of an article with such conventional films is difficult and the shrink-packaged articles would exhibit a poor appearance after a while.

SUMMARY OF THE INVENTION

In view of the situation as described above, an object of the present invention is to provide a packaging film which is highly shrinkable and which experiences little loosening or sagging after the shrink-packaging.

Another object of the present invention is to provide a packaging film which can be prepared by stretching at a temperature lower than the conventional shrinkable packaging films.

Another object of the present invention is to provide a shrinkable packaging film which exhibits a high heat shrinkage, a little natural shrinkage, and a sufficient flexibility, and which shows good appearance after the shrink-packaging.

To attain the above-described objects, there is provided in accordance with the present invention, a highly shrinkable packaging film comprising a stretched film of a resin composition comprising

(A) 5 to 60 parts by weight of a 1-butene-based polymer,

(B) 30 to 90 parts by weight of a propylene-ethylene-based random copolymer, and

(C) 5 to 50 parts by weight of at least one member selected from the group consisting of a petroleum resin, a hydrogenated petroleum resin, and a terpene resin.

The propylene-ethylene-based random copolymer (B) may preferably be a propylene-ethylene random copolymer having a total ethylene content (ET) of from 1 to 10% by mole, and a ratio of chain ethylene content (EB) to the total ethylene content (ET) (EB/ET) of up to 0.7.

Alternatively, the propylene-ethylene-based random copolymer (B) may be a propylene-ethylene-α-olefin random copolymer having a total ethylene content (ET) of from 1 to 10% by mole, a total α-olefin content (αT) of from 1 to 15% by mole, a ratio of chain ethylene content (EB) to the total ethylene content (ET) (EB/ET) of up to 0.7, and a sum of the total ethylene content (ET) and a total α-olefin content (αT) (ET + αT) of from 2 to 20% by mole.

DETAILED DESCRIPTION OF THE INVENTION

The highly shrinkable packaging film of the present invention is hereinafter described in detail.

The highly shrinkable film of the present invention is a film prepared by stretching a film of a resin composition comprising (A) a 1-butene-based polymer, (B) a propylene-ethylene-based random copolymer, and (C) at least one member selected from the group consisting of a petroleum resin, a hydrogenated petroleum resin, and a terpene resin.

The 1-butene-based polymer (A) may be either a homopolymer of 1-butene or a copolymer of 1-butene with at least one member selected from ethylene, propylene, and other $\alpha$-olefins. Here, in the present invention, the word "$\alpha$-olefins" means butene or $\alpha$-olefin containing two or more carbons except for ethylene and propylene. Exemplary $\alpha$-olefins include 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentane, vinylcyclohexane, vinylnorbornane, etc. Exemplary 1-butene-based polymers include 1-butene homopolymers and butene-based random copolymers such as 1-butene-ethylene random copolymers, 1-butene-propylene random copolymers, 1-butene-ethylene-propylene random copolymers, and 1-butene-ethylene-$\alpha$-olefin random copolymers.

In the present invention, when a 1-butene homopolymer is used for the 1-butene-based polymer (A), the resulting packaging film will undergo a smaller decrease in its shrinking stress, and hence, a less significant loosening or sagging after the shrink-packaging, while the film may exhibit a lower shrinkability. On the other hand, when a random copolymer is used for the 1-butene-based polymer (A), the resulting film will experience a larger decrease in its shrinking stress, and hence, a more significant loosening or sagging after the shrink-packaging, while the film may exhibit a higher shrinkability. Furthermore, use of a 1-butene-propylene random copolymer may result in a film having an improved transparency.

To provide an improved blocking resistance with the resulting film, the 1-butene-based polymer (A) may generally have a 1-butene content of at least 50% by mole, and preferably, at least 60% by mole.

The 1-butene-based polymer (A) may also have a melt flow rate (MFR) measured in accordance with ASTM D1238 at a temperature of 190°C and under a load of 2.16 kg of from 0.1 to 30 g/10 min., and preferably, from 0.2 to 25 g/10 min, and most preferably, from 0.3 to 20 g/10 min.

In the film composition of the present invention, either a single polymer or a combination of two or more polymers may be used as the 1-butene-based polymer (A).

The propylene-ethylene-based random copolymer (B) of the film composition of the present invention may be a copolymer mainly comprising propylene and ethylene, for example, a propylene-ethylene random copolymer and a propylene-ethylene-$\alpha$-olefin random copolymer. Exemplary $\alpha$-olefins include 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentane, vinylcyclohexane, vinylnorbornane, etc. In order to provide the resulting film with a high shrinkability, a sufficient rigidity as well as an excellent secondary workability to be suitable for shrink-packaging, the propylene-ethylene-based random copolymer (B) may generally have a total ethylene content (ET) of from 1 to 10% by mole, and preferably, from 1.5 to 10% by mole, and most preferably, from 2 to 8% by mole. Among the above-mentioned propylene-ethylene-based random copolymers (B), the propylene-ethylene random copolymers and the propylene-ethylene-$\alpha$-olefin random copolymers are preferable in view of the high transparency and the high shrinkability of the resulting film.

In order to provide a high transparency and a high shrinkability with the resulting film, the propylene-ethylene-based random copolymer (B) may have a ratio of a chain ethylene content (EB) to the total ethylene content (ET) (EB/ET) of up to 0.7, and preferably, up to 0.6, and most preferably, up to 0.5. In the present invention, the term "total ethylene content (ET)" designates the total content of the ethylene units in the propylene-ethylene-based random copolymer (B), and the term "chain ethylene content (EB)" designates the content in the propylene-ethylene-based random copolymer (B) of the ethylene units which are in chains of two or more units sandwiched between the propylene units. The total ethylene content (ET) and the chain ethylene content (EB) may be measured by $^{13}$C-NMR, for example, in accordance with the method described in Macromolecules, vol. 10, No. 4, 773-778 (1977).

In addition, the propylene-ethylene-based random copolymer (B) may typically have a melt flow rate (MFR) measured in accordance with ASTM D1238 at a temperature of 230°C and under a load of 2.16 kg of from about 0.1 to about 25 g/10 min., and preferably, from about 0.2 to about 20 g/10 min.

When a propylene-ethylene-$\alpha$-olefin random copolymer is used for the propylene-ethylene-based random copolymer (B), it may have a total ethylene content (ET) of from 1 to 10% by mole, and preferably, from 1.5 to 10% by mole, and most preferably, from 2 to 8% by mole; a total $\alpha$-olefin content ($\alpha$T) of from 1 to 15% by mole, and preferably, from 1.5 to 13% by mole, and most preferably, from 2 to 10% by mole; and a propylene content of from 75 to 99% by mole, and preferably, from 80 to 98% by mole, and most preferably, from 85 to 97% by mole. Preferably, the propylene-ethylene-α-olefinrandom copolymer may also have a sum of the total ethylene content (ET) and the total α-olefin content (αT) of from 2 to 20% by mole to provide the resulting film with a high shrinkability, an adequate rigidity, and an excellent secondary workability to be suitable for shrink-packaging.

In the film composition of the present invention, either a single polymer or a combination of two or more polymers may be used as the propylene-ethylene-based random copolymer (B).

The resin (C) in the film composition of the present invention may be selected from petroleum resins, hydrogenated petroleum resins, and terpene resins.

The petroleum resin is a resin derived mainly from unsaturated hydrocarbons recovered from petroleum such as cyclopentadiene or a higher olefin hydrocarbon. The hydrogenated petroleum resin is a resin obtained by hydrogenating a petroleum resin as described above to a hydrogenation rate of at least 80%, and preferably, to a hydrogenation rate of at least 95%. Exemplary petroleum resins and hydrogenated petroleum resins include the resins commercially available in the trade names of Escoretz (TONEX) and Arkon (Arakawa Chemical).

The terpene resin is a terpene hydrocarbon compound represented by the general formula: $(C_5H_8)_n$ or a compound prepared by modifying such a hydrocarbon compound, for example, by hydrogenation. The hydrocarbon compounds represented by the general formula: $(C_5H_8)_n$ include pinene, carene, myrcene, ocimene, limonene, terpinolene, terpinene, sabinene, tricyclene, bisabolene, zingiberene, santalene, camphorene, mirene, totarene, etc. Among these, the most preferred are hydrogenated pinene, and hydrogenated dipentene. The terpene resin used in the present invention may preferably have a hydrogenation rate of at least 80%, and more preferably, at least 90%.

Among the resin (C), the preferred are those having a softening point of from 60 to 160°C, and the most preferred are those having a softening point of from 70 to 150°C to prevent the resin component (C) from oozing out onto the surface of the resulting film, and to provide the resulting film with an improved blocking resistance, and also, to provide the resulting film with a high shrinkability to be suitable for shrink-packaging.

In the present invention, either a single resin or a combination of two or more resins may be used as the resin (C).

In the film composition of the present invention, the 1-butene-based polymer (A), the propylene-ethylene-based random copolymer (B), and the resin (C) may be blended in a ratio of 5 to 60 parts by weight of (A) : 30 to 90 parts by weight of (B) : 5 to 50 parts by weight of (C), and preferably, in a ratio of 7 to 55 parts by weight of (A) : 35 to 86 parts by weight of (B) : 7 to 45 parts by weight of (C), and most preferably, in a ratio of 20 to 50 parts by weight of (A) : 40 to 80 parts by weight of (B) : 10 to 20 parts by weight of (C). The resulting film will then exhibit little decrease in its shrinking stress, and hence, little loosening or sagging after the shrink packaging; adequate rigidity, and hence, improved secondary workability; adequate adhesion during and immediately after the extrusion; and no blocking. In addition, such a film composition will be able to extrude at a high speed and at a relatively low temperature to obtain a highly shrinkable film with a low natural shrinkage to be adequate for shrink packaging.

In addition to the above described components (A), (B) and (C), the resin composition used for producing the film of the present invention may optionally contain a heat stabilizer, an ultraviolet absorbent, a slip agent, an antistatic agent, an anti-fogging agent, an anti-blocking agent, and a crystallization nucleating agent, and the like.

The highly shrinkable packaging film of the present invention may be produced by preparing the resin composition as described above, extruding the resin composition into a film, and stretching the film to produce the packaging film.

The method of preparing the above-described resin composition is not limited to any particular method, and the resin composition may be produced by any appropriate conventional method, for example, by mixing the above-described components (A), (B) and (C) and optional components in a tumbling mixer, V-type blender, Henschel mixer, or the like, and kneading the mixture in an extruder, Banbury mixer, kneader, rolls, or the like. It is preferred to thoroughly knead the mixture.

After the preparation of the resin composition, the resin composition is extruded and stretched in accordance with a non-limited conventional method. For example, the resin composition as described above may be melt-extruded to form a film, and then, the film may be monoaxially stretched in machine direction with heated rolls, or monoaxially stretched in transverse direction with a tenter. The film may also be biaxially stretched by simultaneously or serially stretching the film in machine and transverse directions in an arbitrary order, for example, with a tenter or by blown film extrusion (inflation method).

The film of the present invention may be either monoaxially or biaxially stretched in accordance with the package configuration and other considerations. When the film is monoaxially stretched, it may be stretched to a dimension 2 to 10 times, and preferably, to a dimension 3 to 9 times its dimension. Stretching of the film to a dimension less than 3 times its prestretching dimension would likely to result in an insufficient molecular orientation within the film, leading to an insufficient shrinkage upon heat treatment. A stretching of the film to a dimension more than 10 times its prestretching dimension is likely to result in tearing of the film. When the film is biaxially stretched, it may be stretched to a dimension 1.1 to 10 times its prestretching length and 2 to 10 times its prestretching width, and preferably, to a dimension 1.5 to 9 times its prestretching length and 3 to 9 times its prestretching width. As in the case of the monoaxial stretching, stretching of the film to a dimension less than 3 times its prestretching dimension would result in an insufficient molecular orientation, and hence, in an insufficient shrinkage upon heat treatment; and stretching of the film to a dimension more than 10 times its prestretching dimension is likely to result in tearing of the film.

The stretching of the film may be carried out at a temperature of from 60 to 130°C. In the case of the present film, stretching at a considerably low temperature of up to 100°C still results in a uniformly stretched film.

The present invention is hereinafter described in further detail by referring to the Examples of the present invention and Comparative Examples.

## EXAMPLES

### Example 1

To a single screw extruder with a diameter of 65 mm were fed 60 parts by weight of an ethylene-propylene random copolymer having a melt flow rate of 1.5 g/10 min. (ASTM D1238, 230°C, 2.16 kg), a total ethylene content (ET) of 6.1% by mole, and EB/ET of 0.33; 20 parts by weight of a hydrogenated petroleum resin (Arkon P-125, manufactured by Arakawa Chemical K.K.); 20 parts by weight of a butene-1-propylene random copolymer having a melt flow rate of 4.0 g/10 min. (ASTM D1238, 190°C, 2.16 kg) and a propylene content of 23% by mole; 0.10 parts by weight of tetrakis-[methylene-3(3,5-di-tert-butyl-4-hydroxyphenyl)propionate]-methane (Irganox 1010, manufactured by Ciba-Geigy Inc.); 0.10 parts by weight of 3,5-di-tert-butyl-4-hydroxytoluene (BHT, manufactured by Takeda Chemical Industries, Ltd.); 0.10 parts by weight of calcium stearate; and 0.20 parts by weight of silica. The materials were kneaded to produce pellets of the resin composition.

The resulting pellets of the resin composition were fed to a sheet extruder with a diameter of 40 mm to produce a sheet having a width of 250 mm and a thickness of 0.5 mm.

Next, the resulting sheet was cut into square sheets of 100 mm x 100 mm, and the sheet was biaxially oriented in a batchwise biaxial stretching machine by preheating the sheet to 85°C for 1 minute, stretching in machine direction to twice its prestretching dimension, stretching in transverse direction to five times its prescretching dimension, retaining the temperature of 85°C for another 10 seconds, and then, cooling the film by air.

The resulting biaxially stretched film was evaluated for its heat shrinkage, shrinking stress, natural shrinkage, and stress at yield by the procedure as described below. The film was also evaluated for its minimum stretchable temperature by the procedure as described below. The results are shown in Table 1.

(1) Heat shrinkage

A sample of 10 mm x 150 mm was cut out of the stretched film, and gauges were marked on the sample film at an interval of 100 mm. The sample film was immersed in a glycerin bath heated to a constant temperature for 30 seconds, and then, removed from the bath to measure the distance between the gauges after leaving to stand for 1 hr. The shrinkage was calculated by dividing the decrease of the distance between the gauges by the initial distance between the gauges (100 mm), and expressing the value in percentage.

(2) Residual percentage of shrinking stress

A sample of 10 mm (MD) x 50 mm (TD) was cut out of the stretched film. The sample was mounted on an Instron tensile tester with its distance between the chucks of 30 mm so that the sample sheet could be set with no loosening.

Next, a U-shaped plate was heated until the atmosphere surrounded by the plate reached 120°C. The sample sheet was then heated by the thus heated U-shaped plate for 60 seconds, with the sample sheet being surrounded by the U-shaped plate. The U-shaped plate was then removed, and the sample sheet was kept in an atmosphere of 23°C to allow for the shrinking stress to decrease. In the meanwhile, measurement of the shrinking stress was continued.

The residual shrinking stress was calculated by dividing the shrinking stress 15 hours after the removal of the heated plate by the shrinking stress immediately after the removal (peak stress), and expressing the value by percentage.

(3) Natural shrinkage

The film immediately after the stretching was left in an atmosphere of 40°C for 7 days and shrinkage caused was measured. The natural shrinkage was calculated by dividing the shrinkage caused by the dimension immediately after the stretching, and expressing the value in percentage.

(4) Minimum stretchable temperature

The extruded film was stretched as described above with a batchwise biaxial stretching machine at different temperatures to determine the minimum temperature at which the film could be uniformly stretched with no rupturing.

(5) Stress at yield.

The biaxially stretched film was evaluated for its stress at yield in accordance with ASTM D638.

Example 2

The procedure of Example 1 was repeated except that the amount of the ethylene-propylene random copolymer used in Example 1 was decreased to 50 parts by weight; and 20 parts by weight of the butene-1-propylen random copolymer used in Example 1 was replaced with 30 parts by weight of 1-butene homopolymer having a melt flow rate (ASTM D1238, 190°C, 2.16 kg) of 0.5 g/10 min to produce the resin composition pellets. The resulting pellets were extruded and biaxially stretched to produce a biaxially stretched film. The thus produced biaxially stretched film was evaluated for its heat shrinkage at its minimum stretchable temperature, shrinking stress, natural shrinkage, and stress at yield. The results are also shown in Table 1.

Example 3

The procedure of Example 1 was repeated by using 60 parts by weight of an ethylene-propylene random copolymer having a melt flow rate of 0.51 g/10 min. (ASTM D1238, 230°c, 2.16 kg), a total ethylene content of 6.5% by mole, and EB/ET of 0.37; 10 parts by weight of a hydrogenated petroleum resin (Escoretz 5320, manufactured by TONEX); and 20 parts by weight of a 1-butene-ethylene random copolymer having a melt flow rate (ASTM D1238, 190°C, 2.16 kg) of 1.5 g/10 min and a total ethylene content of 7.8% by mole to produce the resin composition pellets. The resulting pellets were extruded and biaxially stretched to produce a biaxially stretched film. The thus produced biaxially stretched film was evaluated for its heat shrinkage at its minimum stretchable temperature, shrinking stress, natural shrinkage, and stress at yield. The results are also shown in Table 1.

Example 4

The procedure of Example 1 was repeated by using 60 parts by weight of an ethylene-propylene random copolymer having a melt flow rate of 6.0 g/10 min. (ASTM D1238, 230°C, 2.16 kg), a total ethylene content of 3.9% by mole, a total 1-butene content of 2.3% by mole, and EB/ET of 0.28; 15 parts by weight of a hydrogenated petroleum resin (Arkon P-140, manufactured by Arakawa Chemical K.K.); and 25 parts by weight of a butene-1-ethylene random copolymer having a melt flow rate (ASTM D1238, 190°C, 2.16 kg) of 4.3 g/10 min and an ethylene content of 8.2% by mole to produce the resin composition pellets. The resulting pellets were extruded and biaxially stretched to produce a biaxially stretched film. The thus produced biaxially stretched film was evaluated for its heat shrinkage at its minimum stretchable temperature, shrinking stress, natural shrinkage, and stress at yield. The results are also shown in Table 1.

6

Example 5

The procedure of Example 1 was repeated except that the components used in Example 3 were used in the amounts shown in Table 1 to prepare the resin composition pellets and to produce a biaxially stretched film. The thus produced biaxially stretched film was evaluated for its heat shrinkage at its minimum stretchable temperature, shrinking stress, natural shrinkage, and stress at yield. The results are also shown in Table 1.

Example 6

The procedure of Example 1 was repeated except that the components used in Example 1 were used in the amounts shown in Table 1 to prepare the resin composition pellets and to produce a biaxially stretched film. The thus produced biaxially stretched film was evaluated for its heat shrinkage at its minimum stretchable temperature, shrinking stress, natural shrinkage, and stress at yield. The results are also shown in Table 1.

Comparative Example 1

The procedure of Example 1 was repeated by using 100 parts by weight of the propylene-ethylene random copolymer used in Example 1 as the only resin component to produce a biaxially stretched film. The thus produced biaxially stretched film was evaluated for its heat shrinkage at its minimum stretchable temperature, shrinking stress, natural shrinkage, and stress at yield. The results are also shown in Table 1.

Comparative Example 2

The procedure of Example 1 was repeated by using 80 parts by weight of the propylene-ethylene random copolymer and 20 parts by weight of the hydrogenated petroleum resin (Arkon P-125) used in Example 1 to prepare a resin composition and to produce a biaxially stretched film. The thus produced biaxially stretched film was evaluated for its heat shrinkage at its minimum stretchable temperature, shrinking stress, natural shrinkage, and stress at yield. The results are also shown in Table 1.

Comparative Example 3

The procedure of Example 1 was repeated by using 96 parts by weight of the propylene-ethylene random copolymer used in Example 1; 3 parts by weight of the hydrogenated petroleum resin (Arkon P-125); and 3 parts by weight of the butene-1-propylene random copolymer used in Example 1 to prepare a resin composition and to produce a biaxially stretched film. The thus produced biaxially stretched film was evaluated for its heat shrinkage at its minimum stretchable temperature, shrinking stress, natural shrinkage, and stress at yield. The results are also shown in Table 1.

Table 1

| | Component (A) | Component (B) | Component (C) | Minimum stretchable temp., °C | Heat shrinkage, % | Residual shrinking stress, % | Natural shrinkage/ heat shrinkage, | Stress at yield, kg/cm² |
|---|---|---|---|---|---|---|---|---|
| Example 1 | 20 | 60 | 20 | 70 | 38 | 85 | 11 | 205 |
| Example 2 | 30 | 50 | 20 | 70 | 33 | 92 | 8 | 210 |
| Example 3 | 20 | 70 | 10 | 80 | 28 | 83 | 10 | 200 |
| Example 4 | 25 | 60 | 15 | 70 | 31 | 89 | 11 | 190 |
| Example 5 | 50 | 30 | 20 | 70 | 34 | 96 | 6 | 195 |
| Example 6 | 30 | 50 | 20 | 60 | 43 | 87 | 11 | 185 |
| Comparative Example 1 | 0 | 100 | 0 | 100 | 9 | 75 | 18 | 270 |
| Comparative Example 2 | 0 | 80 | 20 | 85 | 69 | 78 | 24 | 295 |
| Comparative Example 3 | 3 | 96 | 3 | 90 | 13 | 75 | 16 | 260 |

As described above, the packaging film of the present invention exhibits a high shrinkability as well as little loosening or sagging after the shrink-packaging. The packaging film of the present invention can be produced by stretching the film at a temperature lower than the conventional packaging films, and nevertheless, the film of the invention exhibits a higher heat shrinkage and a lower natural shrinkage. The packaging film of the present invention is also flexible, and the article packaged by the film of the present invention has a good appearance. Therefore, the highly shrinkable packaging film of the present invention is quite suitable for a label of beverage containers such as bottles and cans, and for shrink-packaging foodstuffs such as instant noodles in a bowl, cassette tapes, video tapes, and other daily use articles.

## Claims

1. A highly shrinkable packaging film comprising a stretched film of a resin composition comprising
   (A) 5 to 60 parts by weight of a 1-butene-based polymer,
   (B) 30 to 90 parts by weight of a propylene-ethylene-based random copolymer, and
   (C) 5 to 50 parts by weight of at least one member selected from the group consisting of a petroleum resin, a hydrogenated petroleum resin, and a terpene resin.

2. The highly shrinkable packaging film according to claim 1 wherein said 1-butene-based polymer (A) is a 1-butene homopolymer.

3. The highly shrinkable packaging film according to claim 1 wherein said 1-butene-based polymer (A) is a 1-butene-$\alpha$-olefin copolymer having a 1-butene content of at least 50% by mole.

4. The highly shrinkable packaging film according to claim 1 wherein said 1-butene-based polymer (A) has a melt flow rate of from 0.1 to 30 g/10 min.

5. The highly shrinkable packaging film according to claim 1 wherein said propylene-ethylene-based random copolymer (B) is a copolymer having a total ethylene content (ET) of from 1 to 10% by mole.

6. The highly shrinkable packaging film according to claim 1 wherein said propylene-ethylene-based random copolymer (B) is a copolymer having a ratio of chain ethylene content (EB) to the total ethylene content (ET) (EB/ET) of up to 0.7.

7. The highly shrinkable packaging film according to claim 1 wherein said propylene-ethylene-based random copolymer (B) has a melt flow rate of from 0.1 to 25 g/10 min.

8. The highly shrinkable packaging film according to claim 1 wherein said propylene-ethylene-based random copolymer is a propylene-ethylene-$\alpha$-olefin random copolymer having a total ethylene content (ET) of from 1 to 10% by mole, and a total $\alpha$-olefin content ($\alpha$T) of from 1 to 15% by mole.

9. The highly shrinkable packaging film according to claim 1 wherein said propylene-ethylene-based random copolymer is a propylene-ethylene-$\alpha$-olefin random copolymer having a sum of the total ethylene content (ET) and the total $\alpha$-olefin content ($\alpha$T) (ET + $\alpha$T) of from 2 to 20% by mole.

10. The highly shrinkable packaging film according to claim 1 wherein said propylene-ethylene-based random copolymer (B) is a copolymer having a total ethylene content (ET) of from 1 to 10% by mole, and a ratio of chain ethylene content (EB) to the total ethylene content (ET) (EB/ET) of up to 0.7.

11. The highly shrinkable packaging film according to claim 1 wherein said propylene-ethylene-based random copolymer (B) is a copolymer having a total ethylene content (ET) of from 1 to 10% by mole, a total $\alpha$-olefin content ($\alpha$T) of from 1 to 15% by mole, a ratio of chain ethylene content (EB) to the total ethylene content (ET) (EB/ET) of up to 0.7, and a sum of the total ethylene content (ET) and the total $\alpha$-olefin content ($\alpha$T) (ET + $\alpha$T) of from 2 to 20% by mole.

12. The highly shrinkable packaging film according to claim 1 wherein said resin (C) is a hydrogenated petroleum resin having a hydrogenation rate of at least 80%.

13. The highly shrinkable packaging film according to claim 1 wherein said resin (C) is a terpene resin.

14. The highly shrinkable packaging film according to claim 13 wherein said terpene resin is a resin having a hydrogenation rate of at least 80%.

**15.** The highly shrinkable packaging film according to claim 1 wherein said resin (C) has a softening point of from 60 to 160°C.

**16.** The highly shrinkable packaging film according to claim 1 wherein the film is monoaxially stretched to a dimension 2 to 10 times its prestretching.

**17.** The highly shrinkable packaging film according to claim 1 wherein the film is biaxially stretched to a dimension 1.1 to 10 times its prestretching length and 2 to 10 times its prestretching width.

European Patent
Office

**EUROPEAN SEARCH REPORT**

Application Number

EP 94 10 5974

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 499 669 (ASAHI KASEI)<br>* page 4, line 8 - line 18 *<br>* page 7, line 23 - line 25 *<br>* page 7, line 28 - page 9, line 10 *<br>----- | 1-17 | C08L23/16<br>C08L23/20 |

TECHNICAL FIELDS
SEARCHED      (Int.Cl.5)

C08L

The present search report has been drawn up for all claims

| Place of search | Date of completion of the search | Examiner |
|---|---|---|
| THE HAGUE | 21 July 1994 | Schmidt, H |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)